# EUROPEAN PATENT APPLICATION

(11) **EP 4 253 780 A1**
(43) Date of publication of application: **04.10.2023**
(21) Application number: 23161509.7
(22) Date of filing: 13.03.2023
(51) Int. Cl.: F16C 33/78, F16C 33/80, F16C 19/38

(54) **SEALING DEVICE FOR ROLLING BEARINGS OF RAILWAY AXLES AND ASSOCIATED ROLLING BEARING**

(30) Priority: 30.03.2022 IT 202200006215
(71) Applicant: Aktiebolaget SKF, 415 50 Göteborg (SE)
(72) Inventor: Long, Andrea, 10065 San Germano Chisone (To) (IT); Breusa Sr, Massimiliano, 10069 Villar Perosa (IT); Capozzi, Marco Giovanni Francesco, 10141 Torino (IT); Guala, Giuseppe, 10064 Pinerolo (IT)
(74) Representative: Tedeschini, Luca

(57) **Abstract**

Sealing device (10) and associated rolling bearing (1), wherein a radially inner ring (6), rotating during use, of the rolling bearing is provided with a step-shaped annular recess (16) formed on a radially outer side surface (18) of an end (12) of the inner ring, a first shield (21) shaped as a C in radial cross-section being keyed onto a corresponding end (11) of an outer ring (5) of the bearing and having a radially inner end (23) which is L-shaped and inserted inside the annular recess (16) of the inner ring; a second shield (24) shaped in radial cross-section as a U is keyed angularly integral with the inner ring (6) inside the annular recess (16) and facing the first shield so as to receive inside the U the radially inner L-shaped end (23) of the first shield with radial clearance both radially on the outside and on the inside, forming with the radially inner end of the first shield (23) a two-stage axial labyrinth sealing system.

## Description

### Technical Sector of the Invention

The present invention relates to a rolling bearing for railway axles, which can be coupled on the axle at a spindle or shaft end of the axle situated on the outboard side or outside of the carriage and therefore exposed to the possible infiltration of external contaminants, the rolling bearing being operatively associated with a sealing device integrated therein, so as to protect its rolling bodies from said infiltration.

### Prior Art

It is known, for example from US9016950B2, that a railway axle comprises a keying spindle or shaft end on which there is mounted a rolling bearing generally forming part of railway axle-box of the known type. The rolling bearing may be mounted both in an outer axial or "outboard" position with respect to the wheel mounted angularly integral on the axle, in which position the rolling bearing is located closer to the outer side of the railway carriage than the wheel, and in an axial inner or "inboard" position, in which the wheel is located closer to the outer side of the railway carriage than the rolling bearing.

In particular in the first case, the rolling bearing is exposed to the possible infiltration of external contaminants, such as water, dust and sludge. In order to prevent this possible infiltration of external contaminants, which could reach the rolling bodies, damaging them and/or their raceways formed on the inner ring and outer ring of the bearing, sealing devices are used, these being able to be inserted between the inner ring and outer ring at respective axial ends thereof directed towards the outside of the bearing, or on the outside of the bearing in the axial direction, in particular being associated with a support ring assembly cooperating with the inner ring of the rolling bearing.

In the first case, the sealing device usually comprises a single shield mounted radially between the inner ring and outer ring of the rolling bearing and shaped so as to define together with the inner ring a winding path, so as to ensure a hydraulic sealing action and, at the same time, a low amount of rotational friction between the inner ring and outer ring. However, the hydraulic sealing action provided by this sealing device is not always sufficient, in particular to prevent the infiltration of water/moisture in static conditions, for example during the operations for washing the railway carriage, the axles of which are equipped with the bearings provided with this sealing device.

In the second case, the sealing device is formed by a pair of annular shields which face each other, but do not make contact, these being associated with the support ring assembly and being shaped so as to define between them a winding path already upstream of the inner and outer rings, so as to ensure a better hydraulic sealing action, but again without increasing the rotational friction between the inner ring and outer ring of the bearing. The sealing action is rendered more effective, during use, by the fact that the rotation of one of the shields, associated with the ring of the rolling bearing rotating during use, produces on the external contaminants a centrifuging effect which moves them away from the winding path defined between the two shields, pushing them outwards.

However, this solution involves large axial dimensions, which are often not acceptable

In order to overcome this drawback it has been proposed to provide one of the shields with an elastomer annular lip shaped so as to make contact with the other shield and thus form together with it a sliding-contact seal which is very much more effective, but which increases during use the friction present between the rings of the rolling bearing in an undesirable manner.

### Summary of the Invention

The object of the present invention is to provide a rolling bearing for railway axles, which can be coupled on the axle at a spindle or shaft end of the axle, in particular at the end situated on the outboard side or outside of the carriage, and which overcomes the drawbacks of the prior art and which is simple and low-cost to manufacture and has small overall dimensions. It is also an object of the invention to provide a sealing device which is integrated in a rolling bearing, in particular for railway axles, able to provide an effective hydraulic sealing action also in static/stationary conditions of the inner ring and outer ring of the rolling bearing, i.e. with rings which are not rotating relative to each other, while ensuring at the same time a small degree of friction of the rolling bearing overall in dynamic conditions, i.e. when the inner ring and the outer ring of the rolling ring are rotating relative to each other.

According to the invention, therefore, a rolling bearing for railway axles and an associated sealing device, integrated in the rolling bearing, having the characteristic features described in the attached claims, are provided.

### Brief Description of the Drawings

The invention will now be described with reference to the accompanying drawings which illustrate two non-limiting examples of embodiment thereof, in which:
- Figure 1 shows in schematic form an elevation and radially sectioned view, with parts omitted for simpler illustration, of one end of a railway axle of the known type provided with a rolling bearing designed in accordance with the invention and incorporating, integrated therein, a first embodiment of a sealing device according to the invention;
- Figure 2 shows in schematic form, on a larger scale, an elevation and radially sectioned view of a detail of the rolling bearing according to Figure 1, including the sealing device according to the first embodiment of the invention;
- Figure 3 shows in schematic form an elevation and radially sectioned view of the same detail of Figure 2, but in which the rolling bearing according to Figure 1 is equipped with a second embodiment of the integrated sealing device according to the invention; and
- Figures 4 and 5 shows, on a further enlarged scale, a same detail of Figures 2 and 3.

### Detailed Description

With reference to Figures 1, 2 and 4, 1 denotes overall a rolling bearing configured in particular for coupling with, or use on, railway axles, in the non-limiting example shown being suitable for coupling on a known axle 2 at a spindle or shaft end 3 of the axle 2.

Here and below specific reference will be made, for the sake of simplicity, to a railway axle 2, without thereby losing its general character, it being clear that the comments made may be applicable to a rolling bearing 1 intended for any other application.

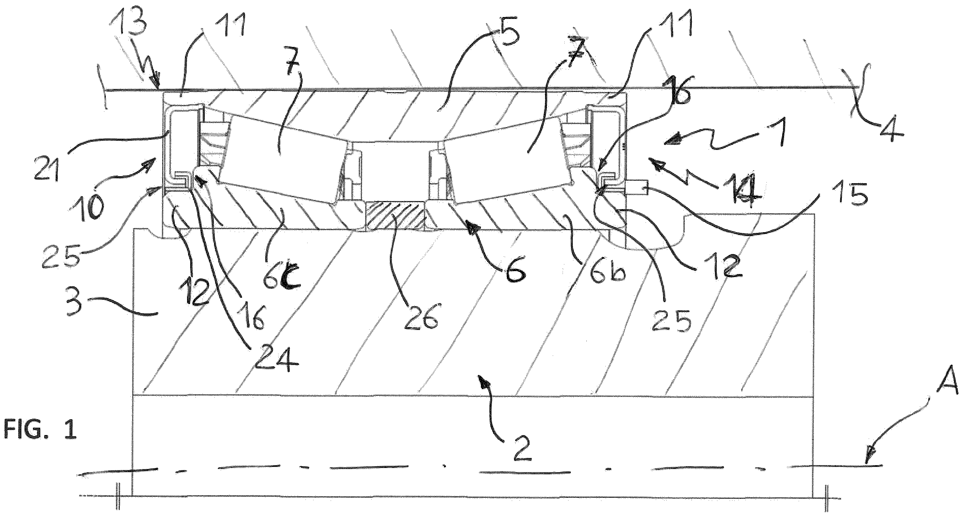

The rolling bearing 1 forms part of a railway axle-box 4 - shown only partly for simpler illustration in Figure 1 - which supports the axle 2 and on which respective wheels 6, known and not shown for simpler illustration, of a railway carriage or locomotive, also known and not shown for simpler illustration, are keyed during use. The axle 2 is normally supported idle by the railway axle-box 4, or, in the case of a driving axle, in a non-idle manner.

The rolling bearing 1 comprises a radially outer ring 5 which is stationary during use and keyed angularly integral inside the axle-box 4, a radially inner ring 6 which is rotating during use and configured to be keyed angularly integral with the railway axle 2, or with any other rotating mechanical member, and at least one row of rolling bodies 7 interposed radially between the outer ring 5 and the inner ring 6 so that said rings are relatively rotatable with respect to each other.

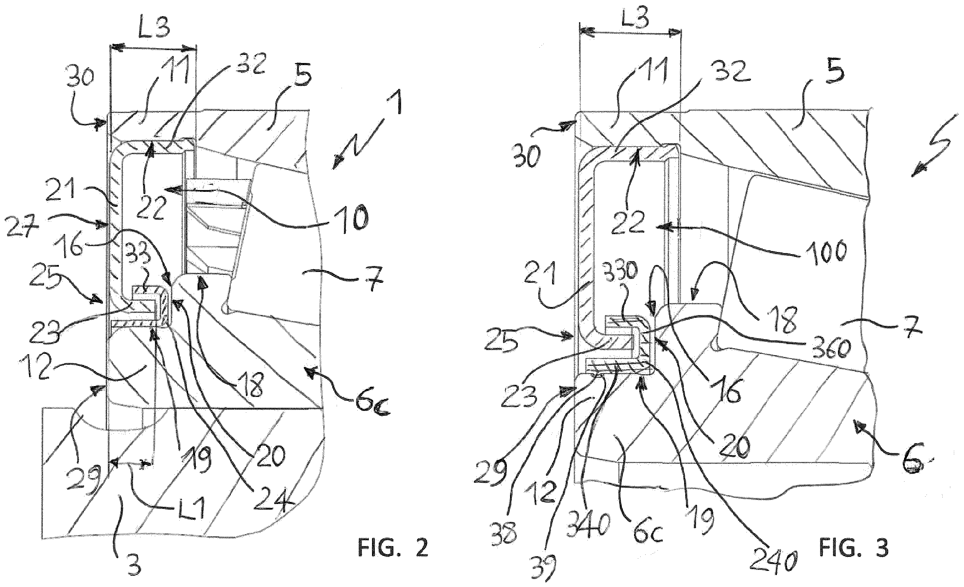

In the non-limiting but preferred example shown, the rolling bearing 1 is a bearing with a double row of tapered rollers 7 and therefore the radially inner ring 6 is divided into two annular elements, or half-rings, 6b and 6c (Figure 1), only one of which, more precisely the annular element 6c, is visible in Figure 2.

According to one aspect of the invention, the rolling bearing 1 further comprises at least one sealing device 10 operatively associated with corresponding first axial ends 11 of the outer ring 5 and 12 of the inner ring 6, so as to exert a hydraulic sealing action between the outer ring 5 and the inner ring 6 by way of protection of the rolling bodies 7.

In the non-limiting example shown, the rolling bearing 1 comprises two opposite sealing devices 10 mounted on opposite ends 13,14 of the bearing 1 defined by opposite ends 11 of the outer ring 5 and by respective ends 12 of the annular elements or half-rings 6b,6c forming the inner ring 6, the ends 12 of the half-rings 6b,6c being opposite to each other. It should be noted that the opposite ends 13 and 14 are not necessarily symmetrical, so that the opposite ends 11 and 12 may be non-symmetrical with each other.

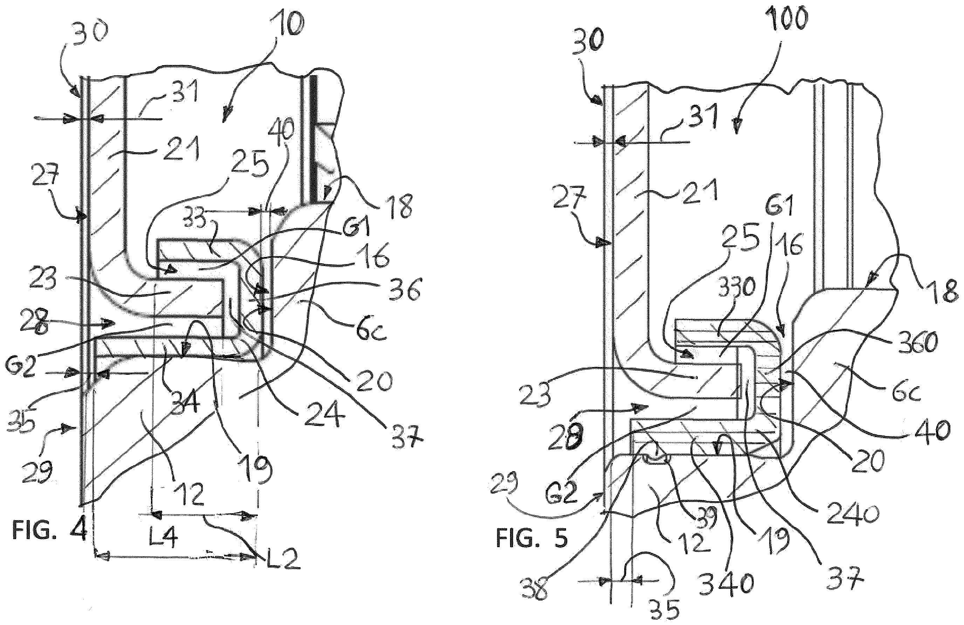

The two sealing devices 10 are substantially identical, except for the fact that the device 10 mounted on the end 14 is preferably provided with a (known) rotational speed sensor 15. Therefore only the sealing device 10 present in/on the end 13 and shown on a larger scale in Figures 2 and 4 will be described.

The sealing device 10, according to one aspect of the invention, is integrated in the rolling bearing 11 and comprises in fact a step-shaped annular recess 16 formed integrally on the end 12 of the inner ring 6, in the case in question on a radially outer side surface 18 of the inner ring 6 (of the half-ring 6c forming part of the inner ring 6, in the example shown in Figures 2 and 4).

The step-shaped annular recess 16 is open and accessible both axially, on the opposite side to the rolling bodies 7, and radially, on the side directed towards the outer ring 5; the recess 16 is in fact delimited by an annular bottom wall 19, flat and parallel to the side surface 18, and by a shoulder wall 20, arranged perpendicularly with respect to the bottom wall 19, and to an axis A of symmetry of the bearing 1 and axis of rotation of the inner ring 6 and directed on the opposite side to the rolling bodies 7.

The sealing device 10 (each device 10) further comprises a substantially rigid first annular shield 21 keyed angularly integral with a radially inner side surface 22 of the end 11 (of each end 11) of the outer ring 5.

The first shield 21 is shaped in radial cross-section preferably as an asymmetrical C facing the rolling bodies 7 and has a radially inner end 23 shaped in radial cross-section preferably as an L, in this particular case folded as an L towards the inner ring 6, the shield 21 being preferably made of a metallic material, for example steel, sheared and folded.

The preferably L-shaped radially inner end 23 of the preferably C-shaped shield 21 is inserted/housed completely inside the annular recess 16 of the inner ring 6, in the particular case illustrated, of the half-ring 6c.

According to one aspect of the invention, the sealing device 10 also comprises a second annular shield 24 keyed angularly integral with the inner ring 6 (in this case with the half-ring 6c) within the annular recess 16, coupled integrally in a form-fit with the bottom annular wall 19 of the annular recess 16.

The second shield 24 is shaped in radial cross-section preferably as an asymmetrical U oriented in an axial direction, namely arranged lying parallel to the axis A and, furthermore, oriented so as to be facing, on the side of its open end 28 (Figure 4), i.e. at the top of the U, towards the first shield 21.

According to one aspect of the invention, the second shield 24 is configured to house in an empty space inside the preferably U-shaped shield, i.e. inside the U delimited by it, and through the open end 28 of this U, the radially inner end 23 of the first shield 21 preferably folded in an L shape.

The end 23, according to one aspect of the invention, is operatively coupled with the shield 24 with radial clearance both towards the inner ring and towards the outer ring 5, so as to define, together with the shield 24, a two-stage axial labyrinth sealing system, indicated in Figures 2 and 4 overall by the reference number 25.

According to one aspect of the invention, the axial length or extension (i.e. measured parallel to the axis A) of the inner ring 6 (considered as being the sum of the lengths of the half-rings 6b, 6c and of any spacer 26 arranged between them) and the outer ring 5 is preferably approximately (i.e. substantially) identical, even though specific applications in which there is no such relation are possible.

In combination, the first shield 21 is housed entirely inside the outer ring 5 so that a first predefined axial gap or clearance 31 (Figure 4) is present between a front face 27 of the first shield 21, facing on the opposite side to the rolling bodies 7, and corresponding front faces 29 and 30 of the end 12 of the inner ring 6 (Figures 2 and 4) and end 11 of the outer ring 5 (Figure 2) respectively, also facing on the opposite side to the rolling bodies 7.

As already mentioned, the first shield 21 and the second shield 24 form in radial cross-section, in the non-limiting but preferred example shown, an asymmetrical C and an asymmetrical U, respectively.

More generally, and the radially inner end 23 of the first shield 21 has an axial length or extension L1 (Figures 2 and 4) which is smaller than an axial length or extension L3 (Figure 2) of an opposite radially outer end 32 (Figure 2) of the first shield 21.

The end 32 is also shaped/folded preferably as an L on the same side as the radially inner end 23.

Furthermore, a radially outer end 33 of the second shield 24, which end 33 is in the non-limiting example shown folded/shaped in radial cross-section preferably as an L towards the first shield 21, has an axial extension or length L2 smaller than an axial extension or length L4 of an opposite radially inner end 34 of the second shield 24, also folded/ shaped in radial cross-section preferably as an L towards the first shield 21, in any case forming a sleeve portion 34 for keying the second shield 24 onto the inner ring 6.

The radially inner L-shaped end 34 of the second shield 24 also has an axial length or extension L4 smaller than the maximum axial extension L3 of the first shield 21 so as to be separated from the front face 27 of the latter by a second predefined axial gap 35, greater than the first axial gap 31 (Figure 4).

Between the radially inner end 23 of the first shield 21 and the radially outer end 33 of the second shield 24 (Figure 4) there is a first predefined radial clearance G1, while between the radially inner end 23 of the first shield 21 and the radially inner end 34 of the second shield 24 there is a second predefined radial clearance G2.

In some embodiments the second radial clearance G2 is greater than the first clearance G1.

Furthermore, the radially outer L-shaped end 33 and radially inner L-shaped end 34 of the second shield 24 are connected radially together (Figure 4) by a flanged portion 36 of the second shield 24, which flanged portion 36 is disposed spaced apart from the radially inner end 23 of the first shield 21, forming together therewith a third predefined axial gap 37 configured to connect hydraulically together the first and second radial clearances G1 and G2.

As already mentioned, the first shield 21 is made of a sheared and folded metallic material obtained from a metal sheet, for example made of steel.

The second shield 24, in the embodiment shown in Figures 2 and 4, is also substantially rigid and is made of a metallic material, sheared and folded, for example steel, in a similar manner to the shield 21.

The shield 24 also has axial and radial dimensions such that, or is configured so that, it is entirely housed inside the annular recess 16.

With reference now to Figures 3 and 5, where details similar to or the same as those already described are indicated for simpler illustration with the same reference numbers, these show a sealing device 100 substantially identical to the sealing device 10 already described, with the sole variant that the second metallic shield 24 is replaced by a second shield 240 made of a moulded synthetic plastic material, preferably a polyamide.

According to this variant, the shield 240 also has axial and radial dimensions such that it is, or is configured to be, entirely housed inside the annular recess 16.

The shield 240 comprises a radially outer end 330 and a radially inner 340 shaped in the manner of, and having the same relative dimensions as, the L-shaped ends 33 and 34 of the shield 24.

The end 340 forms a sleeve portion of the shield 240 for keying the shield 240 onto the inner ring 6 (in the example shown, the half-ring 6c) and is connected to the end 330 by a flanged portion 360 similar to the flanged portion 36.

The radially inner end or sleeve portion 340 of the second shield 240, which is L-shaped in radial cross-section, is provided radially on the inside with an axial locking tooth 38 configured to engage an annular groove 39 formed on the bottom wall 19 of the stepped annular recess 16 present on the radially outer side surface 18 of the inner ring 6.

Finally, in both the embodiments shown in Figures 2 and 3, the shield 24 (or 240) is mounted inside the recess 16 so as to be spaced apart from the shoulder face 20, i.e. separated therefrom by an axial gap 40.

From the above description provided hitherto finally it is clear that the invention also extends to a sealing device 10 for a rolling bearing 1, configured to be positioned between the respective radially inner ring 6 and radially outer ring 5 of the rolling bearing 1 so as to close an annular radial gap defined between respective corresponding axial ends 12 and 11 of the inner ring 6 and outer ring 5, wherein the sealing device 10 is integrated in the rolling bearing 1, comprising, in combination:
i) a step-shaped annular recess 16 integrally formed on the axial end 12 of the inner ring 6, in a radially outer side surface 18 of the inner ring 6;
ii) a first substantially rigid shield 21 configured to be keyed angularly integral with the outer ring 5 of the rolling bearing 1, the first shield 21 being preferably shaped as a C in radial cross-section; and
iii) a second shield 24 (or 240) housed within the annular recess 16, angularly coupled integral with a bottom wall 19 of the annular recess 16, the second shield 24 or 240 being shaped in radial cross-section preferably as a U oriented in an axial direction and so as to be facing, on a side of an open end 28 thereof, towards the first shield 21 ;
iv) the second shield 24 or 240 housing inside the U defined by it a radially inner end 23 of the first shield 21, preferably folded as an L towards the second shield 24/240 and inserted into the annular recess 16 and within the second shield 24/240, so as to define with the latter a two-stage axial labyrinth seal (sealing system) 25 formed by a first and a second radial clearance G1 and G2 delimited between the radially inner end 23 of the first shield 21 and the respective opposite radially outer end 33/330 and inner end 34/340 of the second shield 24/240, preferably shaped as an L towards the first shield 21, and by an axial gap 40 between the radially inner end 23 of the first shield 21 and a flanged portion 36/360 of the second shield 24/240 connecting together the radially inner and outer ends 33/330 and 34/340 of the second shield 24/240.

The labyrinth sealing device or system 10 or 100 described has dimensions which are limited, in particular in the axial direction, and therefore represents a compact sealing solution for a rolling bearing unit, in particular for tapered roller rolling bearings 7, such as the bearing 1 described.

The main function of the sealing system or device 10/100 described is to prevent the entry of water and external contaminants into the bearing 1 and to improve the stabilization of the air flow which inevitably during use arises inside the sealing system.

The solution described may be used in a wide range of applications, owing to its compact design. This solution may also provide advantages, avoiding the creation of corrosion due to fretting, which occurs during use on conventional sealing systems. Furthermore, this solution is more costeffective, in particular when the shield 240 made of synthetic plastic material is used as second shield.

All the objects of the invention are therefore achieved.

## Claims

1. Rolling bearing (1), in particular for railway axles, suitable for coupling on an axle (2) at a spindle or shaft end (3) of the axle, the rolling bearing comprising a radially outer ring (5), stationary during use, a radially inner ring (6), rotating during use, configured to be keyed angularly integral with a rotating mechanical member (2), at least one row of rolling bodies (7) interposed radially between the outer ring and the inner ring so as to make them relatively rotatable, and at least one sealing device (10;100) operatively associated with corresponding first axial ends (11,12) of the outer ring (5) and the inner ring (6) so as to exert a hydraulic sealing action between the outer ring and the inner ring; **characterized in that** the sealing device (10;100) comprises, in combination:
(i) - a step-shaped annular recess (16) formed on the first end (12) of the inner ring (6), on a radially outer side surface (18) of the inner ring (6);
(ii) - a first substantially rigid shield (21) keyed angularly integral with a radially inner side surface (22) of the first end (11) of the outer ring (5), the first shield (21) having a radially inner end (23) inserted into the annular recess (16) of the inner ring and preferably folded in an L shape towards the inner ring, the first shield (21) being shaped in radial cross-section preferably as a C facing the rolling bodies (7); and
(iii) - a second shield (24;240) keyed angularly integral with the inner ring within said annular recess (16), coupled integral with a bottom wall (19) of the annular recess, the second shield being preferably shaped in radial cross-section as a U oriented in an axial direction and so as to be facing, on the side of an open end (28) thereof, towards the first shield (21); the second shield (24;240) being configured to house in an inner space thereof, with radial clearance towards both the inner ring (6) and the outer ring (5), said radially inner end (23) of the first shield, so as to define with said radially inner end of the first shield a two-stage axial labyrinth sealing system (25).

2. Rolling bearing according to claim 1, **characterized in that** the axial length or extension of the inner ring (6) and the outer ring (5) is, preferably, substantially identical and **in that** the first shield (21) is housed entirely inside the outer ring (5) so that between a front face (27) of the first shield, facing on the side opposite to the rolling bodies, and corresponding front faces (29,30) of the first ends of the inner ring and the outer ring, again facing on the side opposite to the rolling bodies, there is present a first predefined axial gap (31).

3. Rolling bearing according to claim 2, **characterized in that** said radially inner end (23) of the first shield has an axial length or extension smaller than that of an opposite radially outer end (32) of the first shield, preferably folded in an L shape on the same side as the radially inner end (23) thereof.

4. Rolling bearing according to claim 3, **characterized in that** a radially outer end (33;330) of the second shield (24;240), preferably folded in an L shape towards the first shield, has an axial length or extension smaller than that of an opposite radially inner end (34;340) of the second shield, preferably also folded in an L shape towards the first shield, forming a sleeve portion for keying the second shield (24;240) onto the inner ring (6); said radially inner end (34;340) of the second shield having an axial length or extension smaller than the axial extension of the first shield (21), so as to be separated from said front face (27) of the latter by a second predefined axial gap (35).

5. Rolling bearing according to claim 4, **characterized in that** between the radially inner end (23) of the first shield (21) and the radially outer end (33;330) of the second shield there is a first predefined radial clearance (G1), while between the radially inner end (23) of the first shield and the radially inner end (34;340) of the second shield there is a second predefined radial clearance (G2), preferably greater than the first clearance (G1).

6. Rolling bearing according to claim 4 or 5, **characterized in that** the L-shaped radially outer end (33;330) and radially inner end (34;340) of the second shield are radially connected to each other by a flange portion (36;360) of the second shield, which is disposed spaced apart from the radially inner end (23) of the first shield, forming with it a third predefined axial gap (37) configured to hydraulically connect together the first and second radial clearances (G1,G2).

7. Rolling bearing according to any one of the preceding claims, **characterized in that** the first shield (21) is made of a metallic material, sheared and folded; said second shield (24) being also substantially rigid and made of a metallic material, sheared and folded, and having axial and radial dimensions such that it is entirely housed in said annular recess (16).

8. Rolling bearing according to any one of claims 1 to 6, **characterized in that** the second shield (240) is made of a moulded synthetic plastic material, preferably a polyamide, and has axial and radial dimensions such that it is entirely housed in said annular recess (16).

9. Rolling bearing according to claim 8, **characterized in that** a radially inner end (340) of the second shield (240), forming a keying sleeve portion of the second shield, is provided radially on the inner side with an axial locking tooth (38) configured to engage an annular groove (39) formed on said bottom wall (19) of the stepped annular recess (16) present on the radially outer side surface (18) of the inner ring (6).

10. Sealing device (10;100) for a rolling bearing (1), configured to be positioned between respective radially inner and outer rings (6,5) of the rolling bearing so as to close an annular radial gap defined between respective corresponding axial ends of the inner and outer rings; the sealing device being **characterized by** comprising, in combination:
i) - a step-shaped annular recess (16) integrally formed on said axial end (12) of the inner ring (5), in a radially outer side surface (18) of the inner ring;
ii) - a first substantially rigid shield (21) configured to be keyed angularly integral with the outer ring (5) of the rolling bearing, said first shield being preferably shape as a C in radial cross-section; and
iii) - a second shield (24;240) housed within said annular recess (16), coupled angularly integral with a bottom wall (19) of the annular recess, the second shield being preferably shaped in radial cross-section as a U oriented in an axial direction and so as to be facing, on the side of an open end (28) thereof, towards the first shield;
iv) - the second shield (24;240) housing in an empty space delimited by it a radially inner end (23) of the first shield, preferably folded in an L-shape towards the second shield, inserted into the annular recess (16) and within the second shield (24;240), so as to define with the latter a two-stage axial labyrinth sealing system (25) formed by a first and a second radial clearance (G1,G2) delimited between the radially inner end (23) of the first shield and the respective opposite radially outer end (33;330) and inner end (34;340) of the second shield, preferably shaped as an L towards the first shield, and by an axial gap (37) between the radially inner end of the first shield and a flanged portion (36;360) of the second shield connecting together the radially inner and outer L-shaped ends of the second shield.
